# EUROPÄISCHE PATENTANMELDUNG

(11) **EP 3 498 361 A1**
(43) Veröffentlichungstag der Anmeldung: **19.06.2019**
(21) Anmeldenummer: 17208211.7
(22) Anmeldetag: 18.12.2017
(51) Int. Cl.: B01D 61/14, C08G 61/08, C08L 65/00

(54) **VERFAHREN ZUR HERSTELLUNG VON TEMPERATURSTABILEN POLYALKENAMEREN**

(71) Anmelder: Evonik Degussa GmbH, 45128 Essen (DE)
(72) Erfinder: MICOINE, Kévin, 45701 Herten (DE); KOLEVA, Velichka, 48734 Reken (DE); MEIER, Ralf, 44265 Dortmund (DE); VAZQUEZ TORAN, Pedro, 46236 Bottrop (DE)

(57) **Zusammenfassung**

Die vorliegende Erfindung betrifft ein Verfahren zur Herstellung von Cycloalkenamer-haltigen Zusammensetzungen. Durch die Zugabe von Alkylvinylethern wird die Polymerisation von Cycloalkenamer gestoppt. Anschließend wird eine Membranfiltration durchgeführt. Durch diese Art der Herstellung werden Polyalkenamere erhalten, die bei 180 °C temperaturstabil sind.

## Beschreibung

Die vorliegende Erfindung betrifft ein Verfahren zur Herstellung Polyalkenamer-haltiger Zusammensetzungen. Die Erfindung betrifft weiterhin die Verwendung von Polyalkenamer-haltigen Zusammensetzungen sowie Polyoctenamer.

Polyalkenamere wie Polyoctenamer (z.B. Vestenamer® der Fa. Evonik) werden zum Beispiel in Reifen, Gummiartikeln, Klebstoffen oder Verpackungen eingesetzt. Der Schmelzpunkt ist bei vielen Anwendungen wichtig, weil ein Polyoctenamer mit einem höheren Schmelzpunkt eine höhere Kristallinität aufweist, was zu besseren mechanischen Eigenschaften in den meisten Anwendungen führt.

Polyoctenamere können durch ringöffnende Metathese von Cycloocten hergestellt werden. Zu diesem Zweck muss ein Katalysator zugegeben werden. Als Katalysator eignen sich beispielweise Wolfram-Komplexe (US3597406, US4095033, DE2619197), Molybdän-Komplexe (EP0218138; Polymer 1995, 36, 2787-2796) und Ruthenium-Komplexe (J. Am. Chem. Soc. 1993, 115, 9858-9859; Macromolecules 1993, 26, 4739-4741). Ruthenium-Carbene sind insbesondere vielfältig anwendbar und tolerieren alle gängigen chemischen Gruppen (EP0626402, US8324334, US2016/159942). Ganz besonders geeignet sind Ruthenium-Carben-Komplexe, die als eines der charakteristischen Merkmale einen N-heterocyclischen-Carben-Liganden tragen.

Ringöffnende Polymerisationsreaktionen können beispielsweise durch die Zugabe von Alkylvinylethern wie Ethylvinylether oder Butylvinylether sowie von Alkylvinylsulfiden wie Ethylvinylsulfid gestoppt werden (Macromolecules 2000, 33, 6239-6248). Dabei wird ein Fischer-Carben gebildet, das die Ringöffnungsmetathese nicht katalysiert.

Mit den bisherigen Herstellungsverfahren mit Mo- oder W-Katalysatoren können Polyoctenamere mit einem Schmelzpunkt von maximal 54 °C bis 56 °C hergestellt werden. Außerdem enthalten solche Polymere üblicherweise hohe Metallbestandteile sowie hohe Chloridanteile. Diese liegen über 50 ppm Wolfram oder Molybdän sowie über 50 ppm Aluminium (bei Al-basierten Cokatalysatoren) bzw. über 50 ppm Chlorid. Die Chlorid- und Metallspuren bleiben im Polymermaterial und können nicht ohne Weiteres abgetrennt werden. Diese Metallspuren müssen bei vielen Anwendungen, zum Beispiel in der Lebensmittelindustrie oder in Medizin, so gering wie möglich gehalten werden.

Polyoctenamer wird nach der Synthese im Produktionsmaßstab bei einer Temperatur über 180 °C während mehrerer Stunden unter Vakuum getrocknet, um das Lösemittel der Reaktion vollständig zu entfernen. Darüber hinaus kann das Polymer je nach Anwendung bei hoher Temperatur verarbeitet werden. Während dieser Hochtemperaturbehandlungen können Nebenreaktionen stattfinden, die den Schmelzpunkt und die Schmelzenthalpie des Polymers verringern. Häufig liegen die Schmelzpunkte von Polyoctenamer unterhalb von 40 °C. Eine Verringerung des Schmelzpunkts und der Schmelzenthalpie bedeutet eine Veränderung der physiko-chemischen Eigenschaften des Polymers, was in sehr vielen Anwendungen nicht akzeptabel ist.

Die WO 2017/060363 beschreibt die Aufreinigung von Polyalkenameren mittels Membranfiltration. Das Polymer wird mit einem Wolfram/Aluminium-Katalysatorsystem hergestellt und weist einen Schmelzpunkt von 54 °C auf. Zudem sind Metallanteile an Aluminium und Wolfram von über 50 ppm enthalten. Weiterhin wird die Reaktion mit Ruthenium-Carbenen als Katalysator beschrieben. Allerdings kann der Katalysator oder ein Abbauprodukt des Katalysators (anorganische Rutheniumspezien) das Membranmaterial verstopfen.

Die Aufgabe der vorliegenden Erfindung bestand darin, Polyalkenamere bereitzustellen, die die Nachteile des Standes der Technik nicht aufweisen. Die Polyalkenamere sollten gegenüber bekannten Polyalkenameren einen höheren Schmelzpunkt aufweisen. Zudem sollten möglichst geringe Metallanteile in den Polyalkenameren enthalten sein. Darüber hinaus sollte das Polyalkenamer bei 180 °C temperaturstabil sein. Ein Polyoctenamer sollte einen Schmelzpunkt von mindestens 57 °C aufweisen.

Überraschend wurde ein Verfahren zur Herstellung von Polyalkenameren gefunden, wodurch die Aufgabe gelöst werden konnte. Das erfindungsgemäße Verfahren zur Herstellung einer Polyakenamer-haltigen Zusammensetzung umfasst dabei die folgenden Schritte:
a) Umsetzen mindestens eines Cycloalkens durch ringöffnende, metathetische Polymerisation unter Erhalt einer Polyalkenamer-haltigen Produktmischung, wobei die Polymerisation in Gegenwart mindestens eines metallhaltigen Katalysators durchgeführt wird, und wobei das Metall ausgewählt ist aus Rhenium, Ruthenium, Osmium oder Mischungen daraus,
b) Zugabe mindestens eines Alkylvinylderivats, welches ausgewählt ist aus Alkylvinylether, Alkylvinylsulfid oder Mischungen davon, nach der Polymerisation und
c) Aufarbeiten der Produktmischung zur Entfernung des Katalysators unter Erhalt der Polyalkenamer-haltigen Zusammensetzung, wobei die Aufarbeitung mittels Membranfiltration erfolgt.

Es wurde überraschend gefunden, dass die Fischer-Carbene (Katalysator-Alkylvinylether-Addukte bzw. Katalysator-Alkylvinylsulfid-Addukt), die durch die Zugabe der Alkylvinylether bzw. Alkylvinylsulfid mit den Katalysatoren gebildet werden, die thermische Stabilität der Polyalkenamere erheblich verbessern. Zudem lassen sich diese Carbene in der Membranfiltration effizienter abtrennen als die metallhaltigen Katalysatoren. Hierdurch können Polyalkenamere mit geringeren Metallanteilen erhalten werden. Die Schmelzpunkte liegen über den Schmelzpunkten der Polyalkenamere, die nach Verfahren des Standes der Technik hergestellt werden. Polyoctenamer, welches durch das erfindungsgemäße Verfahren erhalten wird, weist nach Temperung (180 °C über 20 h, Druck 1 mbar) einen Schmelzpunkt von mindestens 57 °C auf.

In einer bevorzugten Ausführungsform des erfindungsgemäßen Verfahrens ist das Cycloalken ausgewählt aus der Gruppe bestehend aus Cyclobuten, Cyclopenten, Cyclohepten, Cycloocten, Cyclononen, Cyclodecen, Cyclododecen, Cycloocta-1,5-dien, 1,5-Dimethylcycloocta-1,5-dien, Cyclodecadien, Norbornadien, Cyclododeca-1,5,9-trien, Trimethylcyclododeca-1,5,9-trien, Norbornen (Bicyclo[2.2.1]hept-2-en), 5-(3'-Cyclohexenyl)-2-norbornen, 5-Ethyl-2-norbornen, 5-Vinyl-2-norbornen, 5-Ethyliden-2-norbornen, Dicyclopentadien und Mischungen davon. Besonders bevorzugt sind Cyclopenten, Cyclohepten, Cycloocten und Cyclododecen. Cycloocten ist auf Grund der Verfügbarkeit und Handhabbarkeit ein herausragendes Cycloalken. Vorzugsweise umfasst das Cycloalken Cycloocten, besonders bevorzugt besteht es aus diesem Monomer. Es können mehrere Cycloalkene eingesetzt werden, so dass Copolymere des Polyalkenamers entstehen. Die Cycloalkene können substituiert sein mit Alkylgruppen, Arylgruppen, Alkoxygruppen, Carbonylgruppen, Alkoxycarbonylgruppen und/oder Halogenatomen.

Die Polymerisationsreaktion kann ohne Lösemittel betrieben werden. Alternativ kann die Reaktion in mindestens einem Lösemittel durchgeführt werden. Geeignete Lösemittel sind unpolare aromatische oder aliphatische Lösemittel, wobei aprotisch-unpolare, aliphatische Lösemitteln bevorzugt sind. Geeignet sind beispielsweise gesättigte, aliphatische Kohlenwasserstoffe wie Hexan, Heptan, Octan, Nonan, Decan, Dodecan, Cyclohexan, Cycloheptan oder Cyclooctan; aromatische Kohlenwasserstoffe wie Benzol, Toluol, Xylol oder Mesitylen; halogenierte Kohlenwasserstoffe wie Chlormethan, Dichlormethan, Chloroform oder Tetrachlorkohlenstoff; Ether wie Diethylether, Tetrahydrofuran oder 1,4-Dioxan, Ketone wie Aceton oder Methylethylketon, Ester wie Ethylacetat sowie Mischungen der zuvor genannten Lösemittel. Besonders bevorzugt wird das Lösemittel für die Reaktion ausgewählt aus der Gruppe bestehend aus Alkanen mit fünf bis zwölf Kohlenstoffatomen, noch mehr bevorzugt fünf bis acht Kohlenstoffatomen, und Toluol. Des Weiteren sind bevorzugt ausgewählt Tetrahydrofuran, Methylethylketon, Chlormethan, Dichlormethan, Chloroform oder Mischungen daraus. Hexan oder Toluol sind ganz besonders bevorzugt, wobei insbesondere Hexan ausgewählt wird. Der Gehalt an Lösemittel kann beispielsweise auf einen Wert von 20 bis 60 Gew.-%, vorzugsweise von 40 bis 60 Gew.-%, bezogen auf das Gesamtgewicht aus Cycloalken und Lösemittel, eingestellt werden.

Bei der Wahl der Lösemittel für die ringöffnende Metathese-Reaktion ist zu beachten, dass das Lösemittel nicht den Katalysator bzw. die katalytisch aktive Spezies deaktivieren sollte. Dies kann der Fachmann durch einfache Versuche oder durch Studium der Literatur erkennen.

Die Polymerisation wird vorzugsweise bei Temperaturen von 20 bis 100 °C, bevorzugt 30 bis 80 °C, durchgeführt. Der Druck in der Syntheseapparatur beträgt üblicherweise 1 bis 7 bar. Die Monomerkonzentration an Cycloalken beträgt während der Polymerisation 0,1 bis 60 Gew.-%, bevorzugt 20 bis 50 Gew.-%, jeweils bezogen auf das Gesamtgewicht aus Cycloalken und Katalysator sowie ggf. vorhandenen Reglern und Lösemittel.

Zur Katalyse der Polymerisation werden metallhaltige Katalysatoren eingesetzt. Geeignete Metalle sind Rhenium, Ruthenium, Osmium oder Mischungen daraus, wobei Ruthenium-haltige Katalysatoren bevorzugt sind. Besonders geeignet sind Metall-Carben-Komplexe, die einen N-heterocyclischen-Carben-Liganden tragen. Beispiele geeigneter Katalysatoren sind

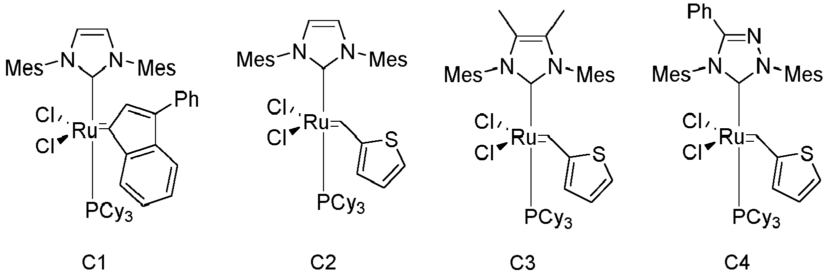

Im Stand der Technik übliche Wolfram-haltige Katalysatoren eignen sich für das vorliegende Verfahren nicht. Durch die Zugabe von Alkylvinylether bilden sich keine Fischer-Carbene und die Metalle des Katalysators lassen sich mittels Membranfiltration nicht wirksam abtrennen. Zudem ist der Schmelzpunkt bspw. von Polyoctenamer, welches mittel Wolfram-Katalysator hergestellt wird, unterhalb von 57 °C.

Zum Abbruch der Polymerisation wird Alkylvinylether bzw. Alkylvinylsulfid gegeben. Geeignete Alkylvinylether werden vorzugsweise aus Methylvinylether, Ethylvinylether, Propylvinylether, Butylvinylether und ihren Mischungen ausgewählt. Bevorzugt sind Ethylvinylether, Butylvinylether und ihre Mischungen. Geeignete Alkylvinylsulfide werden vorzugsweise aus Methylvinylsulfid, Ethylvinylsulfid, Propylvinylsulfid, Butylvinylsulfid und ihren Mischungen ausgewählt. Bevorzugt sind Ethylvinylsulfid, Propylvinylsulfid und ihre Mischungen.

Nach der Zugabe von Alkylvinylether bzw. Alkylvinylsulfid wird der Katalysator in Form eines Addukts von der Polyalkenamer-haltigen Produktmischung mittels Membranfiltration abgetrennt. Hierbei ist es bevorzugt, dass die aufgearbeitete Produktmischung nach der durchgeführten Membranfiltration weniger als 50 ppm Rhenium, weniger als 50 ppm Ruthenium und weniger als 50 ppm Osmium enthält. Besonders bevorzugt sind weniger als 20 ppm Rhenium, weniger als 20 ppm Ruthenium und weniger als 20 ppm Osmium. Ganz besonders bevorzugt ist der Gehalt der drei Metalle in Summe geringer als 10 ppm. Die Angaben beziehen sich jeweils auf die aufgearbeitete, nach 20 h bei 180 °C und 1 mbar getemperte Polyalkenamer-haltigen Zusammensetzung.

Die Produktmischung umfasst Polyalkenamer und Katalysator-Alkylvinylether-Addukt bzw. Katalysator-Alkylvinylsulfid-Addukt. Zudem können nicht abreagiertes Monomer und ggf. Oligomere enthalten sein. Oligomere sind Polymere mit einer molekularen Masse unterhalb von 3000 g/mol. Die Produktmischung wird zur Aufarbeitung einer Filtrationsmembran zugeführt. Diese Art der Membranfiltration kann beispielweise eine Ultrafiltration oder eine Nanofiltration sein, vorzugsweise eine Ultrafiltration. In diesem Schritt werden die kleineren Moleküle (Monomere, Oligomere und Katalysator-Alkylvinylether-Addukt bzw. Katalysator-Alkylvinylsulfid-Addukt) von dem Polymer abgetrennt, wobei sie durch die Membran permeieren. Dabei wird frisches Lösemittel zudosiert, um die kleinen Komponenten durch die Membran zu "waschen". Auf diese Weise gelangen die Monomere, Oligomere und Katalysator-Alkylvinylether-Addukt bzw. Katalysator-Alkylvinylsulfid-Addukt in das Permeat und das Polyalkenamer verbleibt im Retentat.

Für die Membranfiltration kann ein Lösemittel ausgewählt werden, das auch für die Polymerisation geeignet ist. Vorzugsweise wird für Polymerisation und Membranfiltration das gleiche Lösemittel eingesetzt.

Für die Membranfiltration werden üblicherweise 0 bis 10 Waschvolumen (1 Waschvolumen = 1 Feedvolumen), vorzugsweise 1 bis 5 Waschvolumen, eingesetzt. Die so erhaltene Polymerlösung kann weiterverarbeitet werden (bspw. Trocknung, Compoundierung etc.).

Die Membranabtrennung kann sowohl durch Ultrafiltration aber auch durch eine Nanofiltration erfolgen. Für die Ultrafiltration eignen sich die folgenden Bedingungen: Anteil an Polymer 0,1 bis 70 Gew.-%, bezogen auf die Produktmischung, Temperatur von 20 bis 100 °C, bevorzugt 30 bis 80 °C und Druck von 0 bis 6 bar. Für die Nanofiltration eignen sich die folgenden Bedingungen: Anteil an Polymer 0,1 bis 70 Gew.-%, bezogen auf die Produktmischung, Temperatur von 20 bis 100 °C, bevorzugt 30 bis 80 °C und Druck von 10 bis 60 bar.

Das Permeat der Membranfiltration kann einer Nanofiltrationsmembran zugeführt werden, um das Katalysator-Alkylvinylether-Addukt bzw. Katalysator-Alkylvinylsulfid-Addukt und die abgetrennten Oligomere zurückzugewinnen. Das Retentat der Nanofiltration, umfassend das Addukt, kann zur Polymerisationsreaktion zurückgeführt werden. Gegebenenfalls ist der Katalysator zuvor zu reaktivieren. Durch die Zurückführung wird der Verbrauch an frischem Katalysator im Polymerisationsschritt erheblich reduziert. Das Permeat dieser Nanofiltration, das vorwiegend frei von Oligomeren und Addukt ist, kann als Waschlösemittel in die Ultrafiltration zurückgeführt werden. Dadurch kann der Verbrauch an frischem Lösemittel erheblich reduziert werden. Alternativ kann das Lösemittel destilliert und erneut eingesetzt werden.

Typische molekulare Trenngrenzen der Ultrafiltrationsmembran, bei der 90 % der Moleküle einer bestimmten Molmasse zurückgehalten werden, liegen zwischen 1000 bis 100000 g/mol (T. Melin, R. Rautenbach, Membranverfahren: Grundlagen der Modul- und Anlagenauslegung, 3rd ed., Springer 2007, S. 313). Die Trenngrenze der Nanofiltrationsmembranen liegt zwischen 100 und 2000 g/mol (T. Melin, R. Rautenbach, Membranverfahren: Grundlagen der Modul- und Anlagenauslegung, 3rd ed., Springer 2007, S. 286, Diagramm). Demnach kann eine geeignete Membran Nano- oder Ultrafiltrationsmembran sein. Eine geeignete Membran mit gewünschter Trenneigenschaft ist im verwendeten Lösemittel oder Lösemittelgemisch stabil.

Die Membran der Membranfiltration weist vorzugsweise eine Trennschicht aus Polymer, Glas, Metall, Keramik oder deren Gemischen auf.

Geeignete anorganische Membranen werden ausgewählt aus porösen metallischen Materialien, Keramikmembranen oder Polymerkeramikmembranen, welche jeweils aus Aluminiumoxid, Titaniumdioxid, Zirkondioxid, Siliciumdioxid, Titaniumnitrit, Siliziumcarbid oder deren Mischungen und Modifikationen ausgewählt sein könne. Derartige Keramikmembranen werden beispielsweise von Inopor GmbH, PALL Corporation oder TAMI Industries angeboten. Ein Überblick über die Anbieter ist in R. Mallada, M, Inorganic Membranes: Synthesis, Characterization and Applications, Elsevier, 2008, S. 182, Tabelle 6.1, gegeben. Wegen des höheren Verhältnisses der aktiven Membranfläche zum Anlagevolumen sind Membranen in Form von Spiralwickelmodulen der Polymermembranen besonders bevorzugt.

Bevorzugt sind lösemittelstabile-Polymermembranen, wie sie beispielsweise in US 2012/0123079, WO 2010/142979, US 2012/0279922 oder EP 0943645B1 beschrieben werden.

Geeignete Membrantrennschichten sind zum Beispiel in WO 2010/142979, US 2012/0279922 oder EP 0943645B1 beschrieben. Geeignete Polymere sind insbesondere für organische Lösemittel geeignet. Die Membrantrennschichten werden vorzugsweise ausgewählt aus Polydimethysiloxanen (PDMS) oder deren Modifikationen (insbesondere Acrylat-Modifikationen), Polyacrylonitrilen (PAN), Polyimiden (PI), Polyetheretherketonen (PEEK), Polyvinylidenfluoriden (PVDF), Polyamiden (PA), Polyamidimiden (PAD), Polyethersulfonen (PES), Polybenzimidazolen (PBI), sulfonierte Polyetheretherketonen (SPEEK), Polyethylenen (PE) und Polypropylenen (PP). Weniger bevorzugt sind Membranen, die für wässrige optimiert sind. Hierzu zählen meist Polymere wie Celluloseacetat (CA), Polyethersulfone (PES) und Polysulfone (PS).

Geeignete Membranen aus vernetzten Siliconacrylaten sind beispielsweise in US 2015/0328619 beschrieben.

In einer besonderen Ausführungsform der Erfindung wird die trennaktive Schicht der Membran ausgewählt aus vernetzten Siliconacrylaten, Polydimethylsiloxan (PDMS) und Polyimid.

Die Einstellung der Parameter wie Auswahl des Materials der Membrantrennschicht, Temperatur, Druck und Membranoberfläche können vom Fachmann durch geeignete Vorversuche vorgenommen werden. Vorhersagemodelle für die Performance der eingesetzten Membranen existieren derzeit noch nicht.

Nach der Membranabtrennung kann das Lösemittel, in der die Polyalkenamer-haltige Zusammensetzung gelöst ist, entfernt werden. Dies kann beispielsweise durch Erhitzen oder Verringerung des Drucks, beispielsweise mittels Vakuum-Entgasung, vorgenommen werden. Alternativ oder zusätzlich kann eine Trocknung, beispielsweise unter vermindertem Druck und/ oder erhöhter Temperatur, durchgeführt werden, um das Lösemittel zu entfernen. Der erhaltene Feststoff kann zu Partikeln granuliert, beispielsweise durch Stranggranulierung oder Unterwassergranulierung, oder pulverisiert werden, beispielsweise durch Sprühtrocknung oder Vermahlung.

Das erfindungsgemäße Verfahren kann kontinuierlich oder diskontinuierlich durchgeführt werden.

Das Polyoctenamer weist vorzugsweise ein gewichtsmittleres Molekulargewicht (Mw) von 3000 g/mol bis 500000 g/mol, bevorzugt von 2000 g/mol bis 400000 g/mol und besonders bevorzugt von 5000 bis 350000 g/mol. Die Messmethode ist in den Beispielen angegeben.

Das gewünschte Molgewicht kann beispielsweise in Gegenwart mindestens eines Reglers eingestellt werden, der den Kettenaufbau abbrechen lässt. Geeignete Regler sind literaturbekannt und sind beispielsweise acyclische Alkene mit einer oder mehreren nichtkonjugierten Doppelbindungen, die end- oder innenständig liegen können und die vorzugsweise keine Substituenten tragen. Solche Verbindungen sind z.B. Pent-1-en, Hex-1-en, Hept-1-en, Oct-1-en oder Pent-2-en. Alkylvinylether fallen nicht unter diese Definition, da diese nicht als Regler nutzbar sind. Dies ist damit zu erklären, dass Alkylvinylether den Katalysator desaktivieren. Alternativ können cyclische Verbindungen als Regler eingesetzt werden, die in ihrer Seitenkette eine Doppelbindung aufweisen, wie z.B. Vinylcyclohexen.

Das cis/trans-Verhältnis der Cycloalkenamere kann durch dem Fachmann geläufige Methoden eingestellt werden. Beispielsweise ist das Verhältnis abhängig von Katalysatoren, Lösemitteln, Rührintensität oder Temperatur oder Reaktionszeit. Vorzugsweise beträgt der trans-Gehalt mindestens 55 %, bevorzugt mindestens 70 % und besonders bevorzugt 75 bis 85 %. Das cis-/trans-Verhältnis wird mittels ¹H-NMR in Deuterochloroform ermittelt.

Ebenfalls Gegenstand der Erfindung ist die Verwendung mindestens einer erfindungsgemäß hergestellten Polyalkenamer-haltigen Zusammensetzung in Reifen, Gummiartikeln, Klebstoffen oder Verpackungsmaterialien, wobei die Verpackungsmaterialien vorzugsweise für Lebensmittel verwendet werden.

Ein weiterer Gegenstand der Erfindung ist Polyoctenamer mit einem Schmelzpunkt von mindestens 57 °C, vorzugsweise 57 °C bis 60 °C, bevorzugt 58 °C bis 60 °C, besonders bevorzugt 59 °C bis 60 °C, nach Temperung bei einer Temperatur von 180 °C für eine Dauer von 20 h und 1 mbar Druck. Bevorzugt wird das erfindungsgemäße Polyoctenamer nach dem erfindungsgemäßen Verfahren hergestellt.

### Beispiele

### Bestimmungsmethoden

### Gewichtsmittleres Molekulargewicht

Die Bestimmung des Molekulargewichts erfolgte mittels Gelpermeationschromatographie (GPC) angelehnt an DIN 55672-1:2016-03. Die Messungen wurden mit einer GPC-Anlage der Fa. Knauer Wissenschaftliche Geräte GmbH durchgeführt. Das Polymer wurde als Lösung in Tetrahydrofuran (c = 5 g/L, Injektionsvolumen 100 µL) auf einer SDV-Säule (30 cm, 5 µm, linear) mit Vorsäule (SDV 5 cm, 5 µm, 100 Å) bei 23 °C und einem Fluss von 1 mL/min gemessen. Die Berechnung der Molmassenmittelwerte erfolgte mittels der Streifenmethode gegen Polystyrolstandards. Zur Auswertung wurde die Software WinGPC UniChrom (Build 5350) von PSS Polymer Standards Service GmbH eingesetzt.

### Schmelzpunkt und Schmelzenthalpie

Die Bestimmung des Schmelzpunkts und der Schmelzenthalpie erfolgte mittels dynamischer Differenzkalorimetrie (DSC). Polymerproben zwischen 5 und 10 mg wurden gemessen. Die Messungen wurden auf einem DSC-7 Gerät der Firma PerkinElmer mit Stickstoff 5.0 mit 20 mL/min als Spülgas durchgeführt. Das Messprogramm enthielt eine erste Aufheizung von -90°C bis 80°C (Aufheizrate 20 K/min), eine Abkühlung von 80°C auf -90°C (Abkühlrate 20 K/min) und eine zweite Aufheizung von 90°C auf 80°C (Aufheizrate 20 K/min). Der Schmelzpunkt und die Schmelzenthalpie der Polyalkenamere wurden anhand der zweiten Aufheizung bestimmt.

### Elementarspurenanalyse

Die Bestimmungen der Spurenelemente aus dem Katalysator im Polyalkenamer wurden durch ICPMS quantitativ durchgeführt. 0,1 - 0,2 g Probe wurden in 10 ml einer 65 Gew.-%igen HNO₃ und 2 ml Wasser unter max. ca. 130 bar Druck bei max. ca. 300 °C aufgeschlossen. Der Aufschluss wurde im geschlossenen System bei max. ca. 95 °C abgedampft, mit 0,5 ml HNO₃ gelöst und auf 20 ml mit Wasser aufgefüllt. Der Gehalt an verschiedenen Elemente in der Lösung wurde quantitativ mit einem Quadrupol ICPMS "ICAP Q" der Firma Thermo Fisher gemessen.

### Beispiel 1A: Synthese von Polyoctenamer in Heptan mit Wolfram/Aluminium Katalysatorsystem

In einem trockenen 2 L-Glasreaktor wurden 585 mL Heptan, 100 g Cycloocten (COE) und 0,34 g Vinylcyclohexen (VCH) unter Argon eingefüllt. Das Reaktionsgemisch wurde bis 30 °C aufgeheizt und 0,4 mL einer Lösung von Ethylaluminiumdichlorid (20 Gew.-%) in Heptan wurde zugegeben. Anschließend wurde 1 mL einer Lösung von Wolframhexachlorid/Propylenoxid (1/3 mol/mol) in Toluol (2,8 Gew.-% Wolfram) langsam zudosiert. Ein Temperaturanstieg von 5 °C wurde beobachtet und das Reaktionsgemisch wurde deutlich viskoser. Der Inhalt des Reaktors wurde dann abgefüllt und eine Lösung von 20 Gew.-% Polyoctenamer in Heptan wurde erhalten.

### Beispiel 1B (Vergleichsbeispiel): Membranaufreinigung von Polyoctenamer in Heptan mit Wolfram/Aluminium Katalysatorsystem

1,25 L Lösung von 20 Gew.-% Polyoctenamer in Heptan (nach dem Beispiel 1A hergestellt) wurde weiter mit 3,75 L Heptan auf 5 Gew.-% verdünnt. Die erhaltene 5 L Polymerlösung wurde mittels Diafiltration durch eine Ultrafiltration Polymermembran PuraMem® UF (Cut-off ca. 35 000 Da), Produkt von Evonik Resource Efficiency GmbH, gereinigt. Dafür wurde eine Cross-flow Filtrationsanlage mit einem 1812 Membranmodul (Membranfläche ca. 0,14 m²) benutzt. Bei einer Diafiltration wird die Membran als eine halbdurchlässige Barriere angewendet, wobei die große Moleküle (Polymer) zurückgehalten werden und die kleine (Verunreinigungen) durch die Membran mittels Lösemittelzugabe ausgewaschen werden. Die Zugabe von frischem Lösungsmittel war mit dem Permeatfluss synchronisiert, so dass der Füllstand im Vorlagebehälter konstant blieb. Der Versuch wurde bei 50 °C und 3 bar durchgeführt, wobei insgesamt 25 L frisches Heptan zudosiert wurde (5 Waschvolumen im Verhältnis zum Ausgangsvolumen der Polymerlösung). Nach dieser Aufreinigung wurde 5 L Polymerlösung als Retentat erhalten. Außerdem wurde 25 L Permeatlösung erhalten.

### Temperung bei 180 °C

10 mL des Retentats (gereinigte Polymerlösung) wurden für analytische Zwecke in einer Aluminiumschale im Vakuumtrockenschrank nach Inertisierung mit Stickstoff während 20 h bei 180 °C und 1 mbar Vakuum getrocknet. 1,5 g weißer Feststoff wurde erhalten. Das NMR-Spektrum des Feststoffs entsprach die erwartete Struktur eines Polyoctenamers, das 0,25 mol-% Vinylendgruppen und 0,30 mol-% Cyclohexenendgruppen enthielt.
¹H NMR (CDCl₃, 500 MHz, 30 °C) δ (ppm): Polyoctenamer: 5.38, 5.34, 2.01, 1.96, 1.30; Endgruppen: 5.81 (m, 1H, -CH2=CH-CH2-), 5.66 (d, 2H, CH2-CH=CH-CH2), 5.38-5.34 (m, 2H, -CH-CH=CH-CH2), 4.95 (m, 2H, CH2=CH-CH2-).
Schmelzpunkt: 54 °C
Schmelzenthalpie: 75 J/g
Molmasse M_{w}: 135.000 g/mol
Oligomeranteil (M < 3000 g/mol): 3,8%
Eine Elementarspurenanalyse zeigte, dass das Polymer 250 ppm Wolfram, 125 ppm Aluminium und 110 ppm Chlor enthielt.

### Beispiel 2A: Synthese von Polyoctenamer in Heptan mit Ru-Katalysator

In einem trockenen 2 L-Glasreaktor wurden 1L Heptan, 300 g Cycloocten (COE) und 1,03 g Vinylcyclohexen (VCH) unter Argon eingefüllt. Das Reaktionsgemisch wurde bis 70 °C aufgeheizt und eine Lösung von 14,4 mg Tricyclohexylphosphin[1,3-bis(2,4,6-trimethylphenyl)-4,5-dimethylimidazol-2-yliden](2-thienylmethyliden)ruthenium(II)dichlorid (Katalysator C3) in 3,27 mL Toluol wurde zugegeben. Ein Temperaturanstieg von 16 °C wurde beobachtet und das Reaktionsgemisch wurde deutlich viskoser. Der Inhalt des Reaktors wurde dann abgefüllt und eine Lösung von 30 Gew.-% Polyoctenamer in Heptan wurde erhalten.

### Beispiel 2B (Vergleichsbeispiel): Membranaufreinigung von Polyoctenamer in Heptan mit Ru-Katalysator

1,25 L Lösung von 20 Gew.-% Polyoctenamer in Heptan (nach dem Beispiel 2A hergestellt) wurde mit 3,75 L Heptan auf 5 Gew.-% verdünnt. Die erhaltene 5 L Polymerlösung wurde mittels Diafiltration durch eine Ultrafiltration Polymermembran PuraMem® UF (Cut-off ca. 35 000 Da), Produkt von Evonik Resource Efficiency GmbH, gereinigt. Dafür wurde eine Cross-flow Filtrationsanlage mit einem 1812 Membranmodul (Membranfläche ca. 0,14 m²) benutzt. Die Zugabe von frischem Lösungsmittel war mit dem Permeatfluss synchronisiert, so dass der Füllstand im Vorlagebehälter konstant blieb. Der Versuch wurde bei 50 °C und 3 bar durchgeführt, wobei insgesamt 25 L frisches Heptan zudosiert wurde (5 Waschvolumen im Verhältnis zum Ausgangsvolumen der Polymerlösung). Nach dieser Aufreinigung wurde 5 L Polymerlösung als Retentat erhalten. Außerdem wurde 25 L Permeatlösung erhalten.

### Temperung bei 80 °C

10 mL dieser Lösung wurde für analytische Zwecke in einer Aluminiumschale im Vakuumtrockenschrank nach Inertisierung mit Stickstoff während 3 h bei 80 °C und 1 mbar Vakuum getrocknet. 2 g weißer Feststoff wurde erhalten. Das NMR-Spektrum des Feststoffs entsprach zum Teil der erwarteten Struktur eines Polyoctenamers (siehe oben), wobei die Endgruppen (Vinyl- und Cyclohexenendgruppen) abwesend waren und unbekannte Signale im Olefinbereich beobachtet wurden.

### Temperung bei 180 °C

10 mL dieser Lösung wurde für analytische Zwecke in einer Aluminiumschale im Vakuumtrockenschrank nach Inertisierung mit Stickstoff während 20 h bei 180 °C und 1 mbar Vakuum getrocknet. 2 g weißer Feststoff wurde erhalten. Das NMR-Spektrum des Feststoffs entsprach zum Teil der erwarteten Struktur eines Polyoctenamers (siehe oben), wobei die Endgruppen (Vinyl- und Cyclohexenendgruppen) abwesend waren und unbekannte Signale im Olefinbereich beobachtet wurden.
Schmelzpunkt: 30 °C
Schmelzenthalpie: 58 J/g

Die deutlich niedrigeren Schmelzpunkt- und Schmelzenthalpie-Werte im Vergleich zur Trocknung bei 80 °C zeigten, dass das Polymer bei einer Temperatur von 180 °C instabil war. Die Polymerlösung enthielt feine graue Partikeln, die die Membran verblockt haben, so dass ihre weitere Anwendung nicht möglich war. Die grauen Partikel waren vermutlich anorganische rutheniumhaltige Verbindungen, die unlöslich waren und nach der Trocknung im Polymer blieben.

### Beispiel 3A (Vergleichsbeispiel): Synthese von Polyoctenamer in Heptan mit Ru-Katalysator und Zugabe Butylvinylether

In einem trockenen 2 L-Glasreaktor wurden 1 L Heptan, 300 g Cycloocten (COE) und 1,03 g Vinylcyclohexen (VCH) unter Argon eingefüllt. Das Reaktionsgemisch wurde bis 70 °C aufgeheizt und eine Lösung von 14,4 mg Tricyclohexylphosphin[1,3-bis(2,4,6-trimethylphenyl)-4,5-dimethylimidazol-2-yliden](2-thienylmethyliden)ruthenium(II)dichlorid (Katalysator C3) in 3,27 mL Toluol wurde zugegeben. Ein Temperaturanstieg von 17 °C wurde beobachtet und das Reaktionsgemisch wurde deutlich viskoser. Nach 30 Min war die Temperatur wieder bei 70 °C und 2,73 g Butylvinylether wurde zugegeben. Nach 2h bei 70 °C wurde der Inhalt des Reaktors abgefüllt und eine Lösung von 30 Gew.-% Polyoctenamer in Heptan wurde erhalten.

### Temperung bei 80 °C

10 mL dieser Lösung wurde für analytische Zwecke in einer Aluminiumschale im Vakuumtrockenschrank nach Inertisierung mit Stickstoff während 3 h bei 80 °C und 1 mbar Vakuum getrocknet. 2 g weißer Feststoff wurde erhalten. Das NMR-Spektrum des Feststoffs entsprach der erwarteten Struktur eines Polyoctenamers, das 0,31 mol-% Vinylendgruppen und 0,33 mol-% Cyclohexenendgruppen enthielt.
¹H NMR (CDCl₃, 500 MHz, 30 °C) δ (ppm): Polyoctenamer: 5.38, 5.34, 2.01, 1.96, 1.30; Endgruppen: 5.81 (m, 1H, -CH2=CH-CH2-), 5.66 (d, 2H, CH2-CH=CH-CH2), 5.38-5.34 (m, 2H, -CH-CH=CH-CH2), 4.95 (m, 2H, CH2=CH-CH2-).
Schmelzpunkt: 57 °C
Schmelzenthalpie: 78 J/g
Molmasse M_{w}: 104.000 g/mol
Oligomeranteil (M < 3000 g/mol): 6%

### Temperung bei 180 °C

10 mL dieser Lösung wurde für analytische Zwecke in einer Aluminiumschale im Vakuumtrockenschrank nach Inertisierung mit Stickstoff während 20 h bei 180 °C und 1 mbar Vakuum getrocknet. 2 g weißer Feststoff wurde erhalten. Das NMR-Spektrum des Feststoffs entsprach zum Teil die erwartete Struktur eines Polyoctenamers (siehe oben), wobei die Endgruppen (Vinyl- und Cyclohexenendgruppen) abwesend waren und unbekannte Signale im Olefinbereich beobachtet wurden.
Schmelzpunkt: 42 °C
Schmelzenthalpie: 64 J/g

Die deutlich niedrigeren Schmelzpunkt und Schmelzenthalpie im Vergleich zur Trocknung bei 80 °C zeigten, dass das Polymer bei einer Temperatur von 180 °C instabil war. Eine Elementarspurenanalyse zeigte, dass das Polymer 3 ppm Ruthenium enthielt.

### Beispiel 3B (erfindungsgemäß): Membranaufreinigung von Polyoctenamer in Heptan mit Ru-Katalysator und Zugabe Butylvinylether

1,25 L Lösung von 20 Gew.-% Polyoctenamer in Heptan (nach dem Beispiel 3A hergestellt) wurde weiter mit 3,75 L Heptan auf 5 Gew.-% verdünnt. Die erhaltene 5 L Polymerlösung wurde mittels Diafiltration durch eine Ultrafiltration Polymermembran PuraMem® UF (Cut-off ca. 35 000 Da), Produkt von Evonik Resource Efficiency GmbH, gereinigt. Dafür wurde eine Cross-flow Filtrationsanlage mit einem 1812 Membranmodul (Membranfläche ca. 0,14 m²) benutzt. Die Zugabe von frischem Lösungsmittel war mit dem Permeatfluss synchronisiert, so dass der Füllstand im Vorlagebehälter konstant blieb. Der Versuch wurde bei 50 °C und 3 bar durchgeführt, wobei insgesamt 25 L frisches Heptan zudosiert wurde (5 Waschvolumen im Verhältnis zum Ausgangsvolumen der Polymerlösung). Nach dieser Aufreinigung wurde 5 L Polymerlösung als Retentat erhalten. Außerdem wurde 25 L Permeatlösung erhalten.

### Temperung bei 180 °C

10 mL des Retentats (gereinigtes Polymerlösung) wurden für analytische Zwecke in einer Aluminiumschale im Vakuumtrockenschrank nach Inertisierung mit Stickstoff während 20 h bei 180 °C und 1 mbar Vakuum getrocknet. 2 g weißer Feststoff wurde erhalten. Das NMR-Spektrum des Feststoffs entsprach der erwarteten Struktur eines Polyoctenamers, das 0,29 mol-% Vinylendgruppen und 0,30 mol-% Cyclohexenendgruppen enthielt.
¹H NMR (CDCl₃, 500 MHz, 30 °C) δ (ppm): Polyoctenamer: 5.38, 5.34, 2.01, 1.96, 1.30; Endgruppen: 5.81 (m, 1H, -CH2=CH-CH2-), 5.66 (d, 2H, CH2-CH=CH-CH2), 5.38-5.34 (m, 2H, -CH-CH=CH-CH2), 4.95 (m, 2H, CH2=CH-CH2-).
Schmelzpunkt: 57 °C
Schmelzenthalpie: 78 J/g
Molmasse M_{w}: 113.000 g/mol
Oligomeranteil (M < 3000 g/mol): 3,2 %

Der hohe Schmelzpunkt (> 56 °C) und die hohe Schmelzenthalpie (> 75 J/g) zeigten, dass das aufgereinigte Polyoctenamer unter den Temperbedingungen bei 180 °C stabil war.

Die Verringerung des Oligomerenanteils im GPC im Vergleich zur Ausgangslösung (siehe Beispiel 3A) zeigte, dass diese Aufreinigung mittels Ultrafiltration eine Abtrennung von Oligomeren erlaubte. Eine Elementarspurenanalyse zeigte, dass das Polymer lediglich 1,5 ppm Ruthenium enthielt. Außerdem wurden keine unlöslichen Partikel in der Polymerlösung beobachtet.

### Beispiel 4A (Vergleichsbeispiel): Synthese von Polyoctenamer in Heptan mit Ru-Katalysator und Zugabe Ethylvinylsulfid

In einem trockenen 2 L-Glasreaktor wurden 1 L Heptan, 300 g Cycloocten (COE) und 1,03 g Vinylcyclohexen (VCH) unter Argon eingefüllt. Das Reaktionsgemisch wurde bis 60 °C aufgeheizt und eine Lösung von 14,4 mg Tricyclohexylphosphin[1,3-bis(2,4,6-trimethylphenyl)-4,5-dimethylimidazol-2-yliden](2-thienylmethyliden)ruthenium(II)dichlorid (Katalysator C3) in 3,27 mL Toluol wurde zugegeben. Ein Temperaturanstieg von 20 °C wurde beobachtet und das Reaktionsgemisch wurde deutlich viskoser. Nach 30 Min war die Temperatur wieder bei 65 °C und 2,41 g Ethylvinylsulfid wurde zugegeben. Nach 2h bei 60 °C wurde der Inhalt des Reaktors abgefüllt und eine Lösung von 30 Gew.-% Polyoctenamer in Heptan wurde erhalten.

### Temperung bei 80 °C

10 mL dieser Lösung wurde für analytische Zwecke in einer Aluminiumschale im Vakuumtrockenschrank nach Inertisierung mit Stickstoff während 3 h bei 80 °C und 1 mbar Vakuum getrocknet. 2 g weißer Feststoff wurde erhalten. Das NMR-Spektrum des Feststoffs entsprach der erwarteten Struktur eines Polyoctenamers, das 0,31 mol-% Vinylendgruppen und 0,33 mol-% Cyclohexenendgruppen enthielt.
¹H NMR (CDCl₃, 500 MHz, 30 °C) δ (ppm): Polyoctenamer: 5.38, 5.34, 2.01, 1.96, 1.30; Endgruppen: 5.81 (m, 1H, -CH2=CH-CH2-), 5.66 (d, 2H, CH2-CH=CH-CH2), 5.38-5.34 (m, 2H, -CH-CH=CH-CH2), 4.95 (m, 2H, CH2=CH-CH2-).
Schmelzpunkt: 57 °C
Schmelzenthalpie: 79 J/g
Molmasse M_{w}: 110.000 g/mol
Oligomeranteil (M < 3000 g/mol): 3%

### Temperung bei 180 °C

10 mL dieser Lösung wurde für analytische Zwecke in einer Aluminiumschale im Vakuumtrockenschrank nach Inertisierung mit Stickstoff während 20 h bei 180 °C und 1 mbar Vakuum getrocknet. 2 g weißer Feststoff wurde erhalten. Das NMR-Spektrum des Feststoffs entsprach zum Teil die erwartete Struktur eines Polyoctenamers (siehe oben), wobei die Endgruppen (Vinyl- und Cyclohexenendgruppen) abwesend waren und unbekannte Signale im Olefinbereich beobachtet wurden.
Schmelzpunkt: 40 °C
Schmelzenthalpie: 62 J/g

Die deutlich niedrigeren Schmelzpunkt und Schmelzenthalpie im Vergleich zur Trocknung bei 80 °C zeigten, dass das Polymer bei einer Temperatur von 180 °C instabil war. Eine Elementarspurenanalyse zeigte, dass das Polymer 5 ppm Ruthenium enthielt.

### Beispiel 4B (erfindungsgemäß): Membranaufreinigung von Polyoctenamer in Heptan mit Ru-Katalysator und Zugabe Ethylvinylsulfid

1,25 L Lösung von 20 Gew.-% Polyoctenamer in Heptan (nach dem Beispiel 3A hergestellt) wurde weiter mit 3,75 L Heptan auf 5 Gew.-% verdünnt. Die erhaltene 5 L Polymerlösung wurde mittels Diafiltration durch eine Ultrafiltration Polymermembran PuraMem® UF (Cut-off ca. 35 000 Da), Produkt von Evonik Resource Efficiency GmbH, gereinigt. Dafür wurde eine Cross-flow Filtrationsanlage mit einem 1812 Membranmodul (Membranfläche ca. 0,14 m²) benutzt. Die Zugabe von frischem Lösungsmittel war mit dem Permeatfluss synchronisiert, so dass der Füllstand im Vorlagebehälter konstant blieb. Der Versuch wurde bei 50 °C und 3 bar durchgeführt, wobei insgesamt 25 L frisches Heptan zudosiert wurde (5 Waschvolumen im Verhältnis zum Ausgangsvolumen der Polymerlösung). Nach dieser Aufreinigung wurde 5 L Polymerlösung als Retentat erhalten. Außerdem wurde 25 L Permeatlösung erhalten.

### Temperung bei 180 °C

10 mL des Retentats (gereinigtes Polymerlösung) wurden für analytische Zwecke in einer Aluminiumschale im Vakuumtrockenschrank nach Inertisierung mit Stickstoff während 20 h bei 180 °C und 1 mbar Vakuum getrocknet. 2 g weißer Feststoff wurde erhalten. Das NMR-Spektrum des Feststoffs entsprach der erwarteten Struktur eines Polyoctenamers, das 0,29 mol-% Vinylendgruppen und 0,30 mol-% Cyclohexenendgruppen enthielt.
¹H NMR (CDCl₃, 500 MHz, 30 °C) δ (ppm): Polyoctenamer: 5.38, 5.34, 2.01, 1.96, 1.30; Endgruppen: 5.81 (m, 1H, -CH2=CH-CH2-), 5.66 (d, 2H, CH2-CH=CH-CH2), 5.38-5.34 (m, 2H, -CH-CH=CH-CH2), 4.95 (m, 2H, CH2=CH-CH2-).
Schmelzpunkt: 57 °C
Schmelzenthalpie: 80 J/g
Molmasse M_{w}: 125.000 g/mol
Oligomeranteil (M < 3000 g/mol): 0,7 %

Der hohe Schmelzpunkt (> 56 °C) und die hohe Schmelzenthalpie (> 75 J/g) zeigten, dass das aufgereinigte Polyoctenamer unter den Temperbedingungen bei 180 °C stabil war.

Die Verringerung des Oligomerenanteils im GPC im Vergleich zur Ausgangslösung (siehe Beispiel 4A) zeigte, dass diese Aufreinigung mittels Ultrafiltration eine Abtrennung von Oligomeren erlaubte. Eine Elementarspurenanalyse zeigte, dass das Polymer lediglich 2,4 ppm Ruthenium enthielt. Außerdem wurden keine unlöslichen Partikel in der Polymerlösung beobachtet.

### Beispiel 5A: Synthese von Polyoctenamer in Toluol mit Ru-Katalysator und Zugabe Butylvinylether

In einem trockenen 2 L-Glasreaktor wurden 380 mL Toluol, 80 g Cycloocten (COE) und 0,275 g Vinylcyclohexen (VCH) unter Argon eingefüllt. Das Reaktionsgemisch wurde bis 70 °C aufgeheizt. Dann wurde eine Lösung von 6,4 mg Tricyclohexylphosphin[1,3-bis(2,4,6-trimethylphenyl)-4,5-dimethylimidazol-2-yliden](2-thienylmethyliden)ruthenium(II)dichlorid (Katalysator C3) in 1,45 mL Toluol zugegeben. Die Reaktionstemperatur stieg nach 5 Min bis 74 °C und sank wieder auf 70 °C. Dabei wurde das Reaktionsgemisch deutlich viskoser. 30 Min nach der Katalysatorzugabe wurde 0,73 g Butylvinylether zugegeben und das Gemisch wurde weiter bei 70 °C während 2 h gerührt. Der Inhalt des Reaktors wurde dann abgefüllt und eine Lösung von 20 Gew.-% Polyoctenamer in Toluol wurde erhalten.

### Temperung bei 80 °C

10 mL dieser Lösung wurde für analytische Zwecke in einer Aluminiumschale im Vakuumtrockenschrank nach Inertisierung mit Stickstoff während 3 h bei 80 °C und 1 mbar Vakuum getrocknet. 1,7 g weißer Feststoff wurde erhalten. Das NMR-Spektrum des Feststoffs entsprach der erwarteten Struktur eines Polyoctenamers, das 0,3 mol-% Vinylendgruppen und 0,32 mol-% Cyclohexenendgruppen enthielt.
¹H NMR (CDCl₃, 500 MHz, 30 °C) δ (ppm): Polyoctenamer: 5.38, 5.34, 2.01, 1.96, 1.30; Endgruppen: 5.81 (m, 1H, -CH2=CH-CH2-), 5.66 (d, 2H, CH2-CH=CH-CH2), 5.38-5.34 (m, 2H, -CH-CH=CH-CH2), 4.95 (m, 2H, CH2=CH-CH2-).
Schmelzpunkt: 56 °C
Schmelzenthalpie: 78 J/g
Molmasse M_{w}: 101.000 g/mol
Oligomeranteil (M < 3000 g/mol): 8%

### Temperung bei 180 °C

10 mL dieser Lösung wurde für analytische Zwecke in einer Aluminiumschale im Vakuumtrockenschrank nach Inertisierung mit Stickstoff während 20 h bei 180 °C und 1 mbar Vakuum getrocknet. 1,7 g weißer Feststoff wurde erhalten. Das NMR-Spektrum des Feststoffs entsprach zum Teil der erwarteten Struktur eines Polyoctenamers (siehe oben), wobei die Endgruppen (Vinyl- und Cyclohexenendgruppen) abwesend waren und unbekannte Signale im Olefinbereich beobachtet wurden.
Schmelzpunkt: 28 °C
Schmelzenthalpie: 66 J/g

Die deutlich niedrigeren Schmelzpunkt- (< 30 °C) und Schmelzenthalpie-Werte (< 70J/g) im Vergleich zur Trocknung bei 80 °C zeigten, dass das Polymer bei einer Temperatur von 180 °C instabil war. Eine Elementarspurenanalyse zeigte, dass das Polymer 5 ppm Ruthenium enthielt.

### Beispiel 5B (erfindungsgemäß): Membranaufreinigung von Polyoctenamer in Toluol mit Ru-Katalysator und Zugabe Butylvinylether

125 mL Lösung von 20 Gew.-% Polyoctenamer in Toluol aus dem Beispiel 4A wurde mit 375 mL Toluol verdünnt. Die erhaltene 500 mL Polymerlösung (5 Gew.-% in Toluol) wurde durch Ultrafiltration Polymermembran PuraMem® UF (Cut-off ca. 35 000 Da), Produkt von Evonik Resource Efficiency GmbH filtriert. Dafür wurde eine Cross-flow Filtrationsanlage mit 4 Testzellen und Gesamtmembranfläche von 136 cm² benutzt. Der Versuch wurde bei 50 °C und 3 bar durchgeführt, wobei insgesamt 3,5 L frisches Toluol zudosiert wurde (7 Waschvolumen im Verhältnis zum Ausgangsvolumen der Polymerlösung). Nach dieser Aufreinigung wurde 500 mL Polymerlösung als Retentat erhalten. Außerdem wurde 3,5 L Permeatlösung erhalten.

### Temperung bei 180 °C

10 mL dieser Retentatlösung wurde für analytische Zwecke in einer Aluminiumschale im Vakuumtrockenschrank nach Inertisierung mit Stickstoff während 20 h bei 180 °C und 1 mbar Vakuum getrocknet. 1,7 g weißer Feststoff wurde erhalten. Das NMR-Spektrum des Feststoffs entsprach der erwarteten Struktur eines Polyoctenamers, das 0,3 mol-% Vinylendgruppen und 0,32 mol-% Cyclohexenendgruppen enthielt.
¹H NMR (CDCl₃, 500 MHz, 30 °C) δ (ppm): Polyoctenamer: 5.38, 5.34, 2.01, 1.96, 1.30; Endgruppen: 5.81 (m, 1H, -CH2=CH-CH2-), 5.66 (d, 2H, CH2-CH=CH-CH2), 5.38-5.34 (m, 2H, -CH-CH=CH-CH2), 4.95 (m, 2H, CH2=CH-CH2-).
Schmelzpunkt: 59 °C
Schmelzenthalpie: 78 J/g
Molmasse M_{w}: 119.000 g/mol
Oligomeranteil (M < 3000 g/mol): 1,4%

Der hohe Schmelzpunkt (> 56 °C) und die hohe Schmelzenthalpie (> 75 J/g) zeigten, dass das aufgereinigte Polyoctenamer unter den Temperbedingungen bei 180 °C stabil war. Die Verringerung des Oligomerenanteils im GPC im Vergleich zur Ausgangslösung (siehe Beispiel 4A) zeigte, dass diese Aufreinigung mittels Ultrafiltration eine Abtrennung von Oligomeren erlaubte. Eine Elementarspurenanalyse zeigte, dass das Polymer weniger als 1 ppm Ruthenium enthielt (Menge unter der Nachweisgrenze).

### Beispiel 6A: Synthese von Polyoctenamer in Heptan mit Wolfram/Aluminium Katalysatorsystem und Zugabe Butylvinylether

In einem trockenen 2 L-Glasreaktor wurden 585 mL Heptan, 100 g Cycloocten (COE) und 0,34 g Vinylcyclohexen (VCH) unter Argon eingefüllt. Das Reaktionsgemisch wurde bis 30 °C aufgeheizt und 0,4 mL einer Lösung von Ethylaluminiumdichlorid (20 Gew.-%) in Heptan wurde zugegeben. Anschließend wurde 1 mL einer Lösung von Wolframhexachlorid/Propylenoxid (1/3 mol/mol) in Toluol (2,8 Gew.-% Wolfram) langsam zudosiert. Ein Temperaturanstieg von 5 °C wurde beobachtet und das Reaktionsgemisch wurde deutlich viskoser. Der Inhalt des Reaktors wurde dann abgefüllt und eine Lösung von 20 Gew.-% Polyoctenamer in Heptan wurde erhalten.

### Beispiel 6B (Vergleichsbeispiel): Membranaufreinigung von Polyoctenamer in Heptan mit Wolfram/Aluminium Katalysatorsystem und Zugabe Butylvinylether

1,25 L Lösung von 20 Gew.-% Polyoctenamer in Heptan (nach dem Beispiel 5A hergestellt) wurde weiter mit 3,75 L Heptan auf 5 Gew.-% verdünnt. Die erhaltene 5 L Polymerlösung wurde mittels Diafiltration durch eine Ultrafiltration Polymermembran PuraMem® UF (Cut-off ca. 35 000 Da), Produkt von Evonik Resource Efficiency GmbH, gereinigt. Dafür wurde eine Cross-flow Filtrationsanlage mit einem 1812 Membranmodul (Membranfläche ca. 0,14 m²) benutzt. Die Zugabe von frischem Lösungsmittel war mit dem Permeatfluss synchronisiert, so dass der Füllstand im Vorlagebehälter konstant blieb. Der Versuch wurde bei 50 °C und 3 bar durchgeführt, wobei insgesamt 25 L frisches Heptan zudosiert wurde (5 Waschvolumen im Verhältnis zum Ausgangsvolumen der Polymerlösung). Nach dieser Aufreinigung wurde 5 L Polymerlösung als Retentat erhalten. Außerdem wurde 25 L Permeatlösung erhalten.

### Temperung bei 180 °C

10 mL des Retentats (gereinigte Polymerlösung) wurden für analytische Zwecke in einer Aluminiumschale im Vakuumtrockenschrank nach Inertisierung mit Stickstoff während 20 h bei 180 °C und 1 mbar Vakuum getrocknet. 1,5 g weißer Feststoff wurde erhalten. Das NMR-Spektrum des Feststoffs entsprach die erwartete Struktur eines Polyoctenamers, das 0,25 mol-% Vinylendgruppen und 0,30 mol-% Cyclohexenendgruppen enthielt.
¹H NMR (CDCl₃, 500 MHz, 30 °C) δ (ppm): Polyoctenamer: 5.38, 5.34, 2.01, 1.96, 1.30; Endgruppen: 5.81 (m, 1H, -CH2=CH-CH2-), 5.66 (d, 2H, CH2-CH=CH-CH2), 5.38-5.34 (m, 2H, -CH-CH=CH-CH2), 4.95 (m, 2H, CH2=CH-CH2-).
Schmelzpunkt: 54 °C
Schmelzenthalpie: 75 J/g
Molmasse M_{w}: 135.000 g/mol
Oligomeranteil (M < 3000 g/mol): 3,8%
Eine Elementarspurenanalyse zeigte, dass das Polymer 250 ppm Wolfram, 125 ppm Aluminium und 110 ppm Chlor enthielt.

**Zusammenfassung**

| **Beispiel** | **Katalysator** | **Lösungsmittel** | **Zugabe Alkylvinylderivat nach Reaktion** | **Membranfiltration** | **Ergebnisse nach 180 °C Tempern** |
|---|---|---|---|---|---|
| 1A | EADC/WCl₆ | Heptan | Nein | Nein | Smp. 54 °C, 250 ppm W, 125 ppm Al, 110 ppm Cl |
| 1B | EADC/WCl₆ | Heptan | Nein | 5 Waschvolumen | Smp. 54 °C, 250 ppm W, 125 ppm Al |
| 2A | C3 | Heptan | Nein | Nein | Smp. 30 °C, 10 ppm Ru |
| 2B | C3 | Heptan | Nein | 5 Waschvolumen | Smp. 30 °C, Ausfall grauer Partikel |
| 3A | C3 | Heptan | Butylvinylether | Nein | Smp. 42 °C, 3 ppm Ru |
| 3B* | C3 | Heptan | Butylvinylether | 5 Waschvolumen | Smp. 59 °C, 1,5 ppm Ru |
| 4A | C3 | Heptan | Ethylvinylsulfid | Nein | Smp. 40 °C, 5 ppm Ru |
| 4B* | C3 | Heptan | Ethylvinylsulfid | 5 Waschvolumen | Smp. 57 °C, 2,4 ppm Ru |
| 5A | C3 | Toluol | Butylvinylether | Nein | Smp. 28 °C, 5 ppm Ru |
| 5B* | C3 | Toluol | Butylvinylether | 7 Waschvolumen | Smp. 59 °C, <1 ppm Ru |
| 6B | EADC/WCl₆ | Heptan | Butylvinylether | 5 Waschvolumen | Smp. 54 °C, 250 ppm W, 125 ppm Al, 110 ppm Cl |

| | | | | | |
|---|---|---|---|---|---|
| * erfinfungsgemäß EADC=Ethylaluminiumdichlorid, Smp. = Schmelzpunkt | | | | | |

Polyoctenamer, das mit Wolfram-Katalysator synthetisiert und anschließend einer Membranfiltration unterzogen wird, zeigt einen Schmelzpunkt unterhalb von 57 °C. Zudem sind hohe Chlor- und Metallanteile enthalten (vgl. Beispiel 1 B). Eine Zugabe eines Alkylvinylethers (Beispiel 6B) zeigt keine Änderung in Schmelzpunkt und Metallanteilen.

Bei der rutheniumkatalysierten Herstellung von Polyoctenamer führt eine Membranfiltration ohne Alkylvinylether zu einem Ausfall grauer Partikel mit einem sehr niedrigen Schmelzpunkt von 30 °C (Beispiel 2B). Wird Alkylvinylether oder Alkylvinylsulfid zugegeben, ohne eine Membranfiltration durchzuführen, sind die Polymere bei 180 °C nicht temperaturstabil (Schmelzpunkt Beispiel 3A: 42 °C, Beispiel 4A: 40°C, Beispiel 5A: 28 °C) und der Metallanteil im Polymer ist höher.

Die Kombination aus Ruthenium-Katalysator, Alkylvinylether-Zugabe und Membranfiltration führt zu einem bei 180 °C temperaturstabilen Polyoctenamer mit einem hohen Schmelzpunkt von 57 °C bzw. 59 °C.

## Patentansprüche

1. Verfahren zur Herstellung einer Polyalkenamer-haltigen Zusammensetzung, umfassend die Schritte:
a) Umsetzen mindestens eines Cycloalkens durch ringöffnende, metathetische Polymerisation unter Erhalt einer Polyalkenamer-haltigen Produktmischung, wobei die Polymerisation in Gegenwart mindestens eines metallhaltigen Katalysators durchgeführt wird, und wobei das Metall ausgewählt ist aus Rhenium, Ruthenium, Osmium oder Mischungen daraus,
b) Zugabe mindestens eines Alkylvinylderivats, welches ausgewählt ist aus Alkylvinylether, Alkylvinylsulfid oder Mischungen davon, nach der Polymerisation und
c) Aufarbeiten der Produktmischung zur Entfernung des Katalysators unter Erhalt der Polyalkenamer-haltigen Zusammensetzung, wobei die Aufarbeitung mittels Membranfiltration erfolgt.

2. Verfahren nach Anspruch 1, **dadurch gekennzeichnet, dass** Ethylvinylether, Butylvinylether oder Mischungen davon als Alkylvinylether zugegeben werden.

3. Verfahren nach einem der vorherigen Ansprüche, **dadurch gekennzeichnet, dass** Methylvinylsulfid, Ethylvinylsulfid, Propylvinylsulfid, Butylvinylsulfid und ihre Mischungen als Alkylvinylsulfid zugegeben werden.

4. Verfahren nach einem der vorherigen Ansprüche, **dadurch gekennzeichnet, dass** die Membran der Membranfiltration eine trennaktive Schicht aufweist, die ausgewählt ist aus Polymeren, Glas, Metall, Keramik oder deren Gemischen.

5. Verfahren nach Anspruch 4, **dadurch gekennzeichnet, dass** die trennaktive Schicht der Membran ausgewählt wird aus vernetzten Siliconacrylaten, Polydimethylsiloxan (PDMS) und Polyimid.

6. Verfahren nach Anspruch 1 bis 4, **dadurch gekennzeichnet, dass** die Membranfiltration eine Ultrafiltration ist.

7. Verfahren nach einem der vorherigen Ansprüche, **dadurch gekennzeichnet, dass** das Cycloalken ausgewählt ist aus der Gruppe bestehend aus Cyclobuten, Cyclopenten, Cyclohepten, Cycloocten, Cyclononen, Cyclodecen, Cyclododecen, Cycloocta-1,5-dien, 1,5-Dimethylcycloocta-1,5-dien, Cyclodecadien, Norbornadien, Cyclododeca-1,5,9-trien, Trimethylcyclododeca-1,5,9-trien, Norbornen (Bicyclo[2.2.1]hept-2-en), 5-(3'-Cyclohexenyl)-2-norbornen, 5-Ethyl-2-norbornen, 5-Vinyl-2-norbornen, 5-Ethyliden-2-norbornen, Dicyclopentadien und Mischungen davon.

8. Verfahren nach Anspruch 6, **dadurch gekennzeichnet, dass** das Cycloalken ausgewählt ist aus der Gruppe bestehend aus Cyclopenten, Cyclohepten, Cycloocten, Cyclododecen und Mischungen davon.

9. Verfahren nach Anspruch 6, **dadurch gekennzeichnet, dass** das Cycloalken Cycloocten umfasst.

10. Verfahren nach einem der vorherigen Ansprüche, **dadurch gekennzeichnet, dass** die Polymerisation in einem unpolaren aromatischen oder aliphatischen Lösungsmittel durchgeführt wird.

11. Verfahren nach einem der vorherigen Ansprüche, **dadurch gekennzeichnet, dass** Polymerisation und Membranfiltration in Lösemitteln durchgeführt und für Polymerisation und Membranfiltration das gleiche Lösemittel eingesetzt wird.

12. Verfahren nach einem der vorherigen Ansprüche, **dadurch gekennzeichnet, dass** das Metall des Katalysators aus Ruthenium ausgewählt wird.

13. Verfahren nach einem der vorherigen Ansprüche, **dadurch gekennzeichnet, dass** die Umsetzung von Cycloalkenen in Gegenwart eines Reglers, vorzugsweise in Gegenwart von acyclischen Alkenen als Regler mit einer oder mehreren nichtkonjugierten Doppelbindungen, oder cyclische Verbindungen, die in ihrer Seitenkette eine Doppelbindung aufweisen, erfolgt.

14. Verwendung mindestens einer Polyalkenamer-haltigen Zusammensetzung, die nach einem der Ansprüche 1 bis 13 erhalten wird, in Reifen, Gummiartikeln, Klebstoffen oder Verpackungsmaterialien.

15. Polyoctenamer mit einem Schmelzpunkt von mindestens 57 °C nach Temperung bei einer Temperatur von 180 °C für eine Dauer von 20 h.
